# EUROPÄISCHE PATENTSCHRIFT

(11) **EP 3 144 658 B1**
(45) Veröffentlichungstag und Bekanntmachung des Hinweises auf die Patenterteilung: **10.06.2020**
(21) Anmeldenummer: 16001988.1
(22) Anmeldetag: 13.09.2016
(51) Int. Cl.: G01M 5/00, G01M 13/04

(54) **GERÄT MIT WENIGSTENS EINEM ELASTISCH VERFORMBAREN BAUTEIL UND VERFAHREN ZUR FESTSTELLUNG DES BEGINNS EINER VERSCHLEISSBEDINGTEN BAUTEIL-RESTNUTZUNGSDAUER**
DEVICE WITH AT LEAST ONE ELASTICALLY DEFORMABLE COMPONENT AND METHOD FOR DETECTING THE ONSET OF WEAR-RELATED COMPONENT REMAINING LIFE
APPAREIL COMPRENANT AU MOINS UN COMPOSANT DEFORMABLE ELASTIQUEMENT ET PROCEDE DE DETERMINATION DU DEBUT DE LA VIE RESIDUELLE D'UN COMPOSANT EN FONCTION DE L'USURE

(30) Priorität: 15.09.2015 DE 102015011760
(43) Veröffentlichungstag der Anmeldung: 22.03.2017
(73) Patentinhaber: Jörn GmbH, 71336 Waiblingen (DE)
(72) Erfinder: Reinke, Kai, 71686 Remseck (DE)
(74) Vertreter: Liebl, Thomas

(56) Entgegenhaltungen:
- WO-A2-01/20299
- WO-A2-2008/080395
- DE-A1- 10 257 793

## Beschreibung

Die Erfindung betrifft ein Gerät mit wenigstens einem elastisch verformbaren Bauteil als Strukturteil und/oder Lagerteil nach dem Oberbegriff des Anspruchs 1 zur Feststellung des Beginns einer verschleißbedingten Bauteil-Restnutzungsdauer.

Es handelt sich um Geräte, bei denen auf elastisch verformbare Bauteile als Strukturteile und/oder Lagerteile im Betrieb abhängig von wechselnden Betriebszuständen unterschiedliche Verformungskräfte einwirken, die letztendlich zu einem die Bauteilnutzungsdauer begrenzenden Bauteilverschleiß führen.

Der Begriff "Gerät" ist hier allgemein zu verstehen und weit auszulegen, wobei ortsfeste Maschinen ebenso wie Fahrzeuge umfasst sein sollen, die betriebsbedingt externen Kräften ausgesetzt sind und/oder selbst Kräfte erzeugen, die zu den Bauteil-Verformungen führen.

Auch der weiter verwendete Begriff "Gummi-Metall-Lager" ist, wie in Fachkreisen üblich, allgemein zu verstehen und weit auszulegen, wobei "Gummi" als Synonym für "Elastomermaterial" und "Metall" für ein verformungssteifes Lagerbauteil steht, das insbesondere auch aus Kunststoff bestehen kann.

Elastisch verformbare Bauteile können insbesondere Elastomerlager, insbesondere Gummi-Metall-Lager und/oder Kunststoffteile, insbesondere Faserverbundteile sein. Bekanntlich sind solche Bauteile bei richtiger Auslegung über eine lange Nutzungsdauer auch bei hohen oszillierenden Belastungen funktionssicher und im Prinzip verschleißfrei. Ein Kriterium für die Funktion eines solchen Bauteils ist die Verformung unter Krafteinwirkung bzw. die entsprechende Bauteilsteifigkeit.

An Muster-Bauteilen und an Kontroll-Bauteilen einer Serie wird in bekannter Weise die Bauteilnutzungsdauer auf einem Prüfstand bei klar definierten Verhältnissen gemessen. Dazu wird beispielsweise ein Gummi-Metall-Lager mit oszillierenden Belastungen beaufschlagt. Es werden die Lastwechsel oder sich wiederholende Lastblöcke gezählt und dabei werden Kraft und Verformung gemessen, wobei einer der beiden Werte vorgegeben wird. Daraus wird ein Diagramm als Messkurve erzeugt, in dem eine abfallende Steifigkeit über die Zahl der Lastwechsel erkennbar ist. Die Zahl der Lastwechsel ist unmittelbar als Nutzungsdauer interpretierbar. Aus einem solchen Diagramm ist jeweils im Laufe der Nutzungsdauer eine Zunahme der Verformung entsprechend einem Abfall der Steifigkeit in charakteristischen drei Stufen erkennbar. In der ersten Stufe fällt die Steifigkeit sehr schnell, beispielsweise um zirka 30% ab, was als Fließen und Setzen bezeichnet wird. Anschließend wird über eine vergleichsweise sehr lange Nutzungsdauer nur ein sehr geringer Abfall der Steifigkeit gemessen entsprechend einem Plateauverlauf mit linearem und/oder leichtem Abfall der Steifigkeit. Daran schließt sich ein messbarer vergleichsweise zügiger progressiver Abfall der Steifigkeit an, welcher das nahe Ende der Bauteilfunktion mit einem möglichen Ausfall und damit das Ende der Nutzungsdauer markiert.

Der Grund für dieses messbare Verhalten insbesondere eines Gummi-Metall-Lagers liegt darin, dass bei dauernden hohen oszillierenden Belastungen durch anliegende Kräftemomente oder durch aufgezwungene Verformungen Molekülketten aufreißen, die sich dann wegen der anliegenden Wechsellasten nicht mehr regenerieren können. Insbesondere in der dritten Stufe potenzieren sich diese Vorgänge und es kommt auch zu optisch erkennbaren Rissen und Schäden, die mit einem schnellen Abfall der Bauteilsteifigkeit zu einem beginnenden Ende der Nutzungsfunktion und letztendlich zu einem Ausfall führen. Ausgehend von Messungen der Nutzungsdauer auf einem Prüfstand wird dann mit Sicherheitsabschlägen für fertigungsbedingte Toleranzen und differierende reale Bauteilbelastungen eine Nutzungsdauer für Serienteile im Einbauzustand abgeschätzt und angegeben. Übliche typische Nutzungsdauern entsprechend der ersten und zweiten Stufe des oben genannten Diagramms liegen in der Größenordnung von 6 bis 10 Jahren. Wenn die dritte Diagrammstufe erreicht ist, muss zwar ein Gummi-Metall-Lager zeitnah ausgetauscht werden, kann aber noch über mehrere Wochen, gegebenenfalls Monate bis zu einem Totalausfall weiter verwendet werden.

Ähnlich den vorstehend in Verbindung mit einem Gummi-Metall-Lager erläuterten Steifigkeitsverlauf verhält sich bei entsprechenden Belastungen üblicherweise auch ein Kunststoffteil, insbesondere ein Faserverbundbauteil, bei dem sich durch oszillierende Belastungen und erzwungene Verformungen der Faserverbund lockert und auflöst.

Bei vielen Anwendungen solcher Bauteile kann das beginnende Ende der Nutzungsdauer entsprechend der dritten Diagrammstufe relativ einfach erkannt werden, beispielsweise durch eine veränderte Geräuschentwicklung oder bei einem Fahrzeug durch ein verändertes Fahrverhalten. Bei leicht zugänglichen Einbausituationen kann eine beginnende Schädigung entsprechend der dritten Diagrammstufe gegebenenfalls auch optisch erkannt werden.

Es gibt aber auch zahlreiche Anwendungen, bei denen eine stark nachlassende Steifigkeit eines solchen Bauteils für einen Nutzer eines Geräts, beispielsweise eines Fahrzeugs oder einer Maschine nicht spürbar ist und die Bauteile so verbaut sind, dass eine optische Kontrolle nicht möglich ist. Ein Bauteilschaden kann dann zu einem Sicherheitsrisiko oder zu teuren Folgeschäden und Betriebsausfällen führen. Beispielsweise finden sich solche Einbausituationen bei Wagons und Lokomotiven von Zügen, bei Fluggeräten, Windenergieanlagen und Schiffen sowohl bei Lagerungen als auch bei Strukturelementen aus Kunststoff.

Gerade für solche Einsatzfälle werden bisher relevante Bauteile nach Möglichkeit im Vorfeld getestet und mit gemessenen Belastungsdaten eine maximale Laufzeit festgelegt, nach der sie unter Berücksichtigung einer normalen Streuung und mit Sicherheitsabschlägen meist lange vor einer möglichen Lebensdauer getauscht werden, lange bevor eine Schädigung weit fortgeschritten ist.

Nachteilig muss für einen solchen präventiven Tausch eines Bauteils in regelmäßigen Wartungsintervallen das Gerät, zum Beispiel ein Fahrzeug oder eine Maschine außer Betrieb gesetzt werden. Um ein Sicherheitsrisiko und Folgeschäden auszuschließen, muss ein Bauteiltausch deutlich vor einer im Mittel möglichen Nutzungsdauer erfolgen. Dies führt zu hohen Ausfall-, Bauteil-und Wartungskosten, die noch nicht durch den aktuellen und noch funktionssicheren Bauteilzustand erforderlich wären. Da in einem Gerät regelmäßig mehrere solcher Bauteile, beispielsweise Gummi-Metall-Lager verbaut sind, vervielfachen sich die Kosten entsprechend.

Zudem ist ein Verfahren zur Feststellung eines Verschleißzustands eines Strukturbauteils bekannt (WO 01/20299 A2), bei dem Lastdaten zusammen mit Verformungsdaten erfasst werden. Daraus werden in Verbindung mit einem Intervall eine Rissvergrößerungs-Funktion und daraus eine Indikator-Funktion gebildet, aus der ein möglicher verschleißbedingter Ausfall des Strukturbauteils ableitbar ist.

Aufgabe der Erfindung ist es, bei einem Gerät mit wenigstens einem elastisch verformbaren Bauteil als Strukturteil und/oder Lagerteil die mögliche Bauteilnutzungsdauer genauer festzustellen, als dies durch Prüfstandsmessungen und Abschätzungen möglich ist, insbesondere den Beginn einer verschleißbedingten Restnutzungsdauer eines elastisch verformbaren Bauteils zu bestimmen.

Diese Aufgabe wird mit den Merkmalen des Patentanspruchs 1 gelöst. Vorteilhafte Ausgestaltungen sind Gegenstand der darauf rückbezogenen Unteransprüche.

Gemäß Anspruch 1 weist ein solches Gerät eine Erfassungseinheit auf, die ausgestaltet ist, einen vorbestimmten sich zeitversetzt wiederholenden, jeweils gleichen Betriebszustand zu erkennen und zu erfassen, dem jeweils eine gleiche Verformungskraft zugeordnet ist. Vorzugsweise wird ein Betriebszustand ausgewählt und bestimmt, der relativ häufig mit einer deutlich messbaren Bauteilverformung auftritt, so dass eine relativ große Anzahl von auswertbaren Messergebnissen gewonnen werden kann. Vorzugsweise sollen beim ausgewählten Betriebszustand Lastniveaus mit relativ hohem Schädigungsanteil, insbesondere andauernde, hohe oszillierende Belastungen am Bauteil auftreten. Dabei wird davon ausgegangen, dass bei weitgehend gleichen Betriebszuständen des Geräts die dadurch am Bauteil auftretenden Verformungskräfte ebenfalls weitgehend gleich sind. Grundsätzlich könnten auch mehrere unterschiedliche Betriebszustände für mehrere parallele Auswertungen oder für Auswertungen an anderen oder mehreren im Gerät verbauten Bauteilen vorbestimmbar sein.

Das Gerät weist weiter einen bauteilzugeordneten Sensor und eine nachgeschaltete Mess- und Auswerteeinheit auf, wobei bei Erkennung und Erfassung eines solchen vorbestimmten Betriebszustands durch die Erfassungseinheit mit einem Startsignal selbsttätig ein Messvorgang startbar und durchführbar ist, und für eine Bauteilüberwachung mit dem Sensor und der Mess- und Auswerteeinheit eine Bauteilverformung als Kenngröße für eine aktuelle Bauteilsteifigkeit messbar ist und der Messwert speicherbar ist. Die auf das Bauteil einwirkende Verformungskraft muss hier vorteilhaft nicht absolut gemessen werden. Ebensowenig ist es erforderlich, die Bauteilverformung bzw. deren Kehrwert als Bauteilsteifigkeit absolut zu messen, da bei der weiteren Auswertung nur Relativwerte und tendenzielle Verläufe zwischen aufeinanderfolgenden Messwerten herangezogen werden.

Die Mess- und Auswerteeinheit weist eine Vergleichereinheit auf, mit der ein Vergleich eines aktuellen Verformungsmesswerts bezüglich vorhergehender gespeicherter Verformungsmesswerte durchführbar ist, wobei sich folgende Ergebnisse zeigen können:
Die über eine relativ lange Nutzungsdauer gespeicherten Verformungsmesswerte bzw. entsprechende Kenngrößen für die Bauteilsteifigkeit sind etwa gleich. Bei der Erstellung einer Messkurve, die zum Ausgleich von Messtoleranzen gemittelt und geglättet wird, ergibt sich ein Plateaubereich mit im Verlauf der langen Nutzungsdauer von üblicherweise mehreren Jahren nur relativ geringem Neigungsanstieg für die Bauteilverformung bzw. Neigungsabfall für die Bauteilsteifigkeit. Bei so einem Vergleichsergebnis ist eine weitere sichere Bauteilfunktion feststellbar. Dieser Plateaubereich entspricht der eingangs erwähnten zweiten Stufe des dort erwähnten Steifigkeitsdiagramms.

Wenn aber über eine gegenüber der Nutzungsdauer des Plateaubereichs relativ kurze Nutzungsdauer von üblicherweise wenigen Tagen/Wochen nacheinander erfasste Verformungsmesswerte sukzessiv und progressiv größer werden, ist der unkritische Plateaubereich deutlich mit einem starken Steigungsanstieg einer Messkurve bezüglich der Bauteilverformung bzw. einem starken Neigungsabfall einer Messkurve bezüglich der Bauteilsteifigkeit verlassen. Wenn ein solcher als Schwellwert vorgebbarer Steigungsanstieg bzw. Neigungsabfall festgestellt wird, ist damit der Beginn einer verschleißbedingten vorgebbaren Bauteil-Restnutzungsdauer feststellbar. Zudem ist eine entsprechende Warninformation, beispielsweise als optisches oder akustisches Signal ausgebbar, die auf einen erforderlichen Bauteilaustausch hinweist. Dieses zweite Ergebnis liegt vor, wenn die dritte Stufe im eingangs beschriebenen Steifigkeitsdiagramm erreicht ist.

Wenn zu Beginn einer Bauteilnutzung über einen gegenüber der Nutzungsdauer des Plateaubereichs relativ kurzen Zeitabstand ein steiler Bereich der Messkurve festgestellt wird, entspricht dies der ersten Stufe im vorstehend erläuterten Steifigkeitsdiagramm. Diese nachlassende Steifigkeit durch Fließen und Setzen zu Beginn der Nutzung ist unkritisch, die entsprechenden Messwerte werden bei der Bewertung für einen Beginn einer Restnutzungsdauer herausgenommen und nicht verwertet.

Kern der Erfindung ist somit eine qualitative Bestimmung der Steifigkeit des verformbaren Bauteils, die im verbauten Zustand nicht unmittelbar messbar ist. Nur in Kenntnis einer Kraft und Verformung, wie beispielsweise auf einem Prüfstand, lässt sich die Steifigkeit absolut bestimmen. In einer technischen Anwendung ist es mit vertretbarem Aufwand nicht möglich, die an einem verbauten Bauteil anliegende Kraft zu messen. Wege oder Verformungen hingegen sind relativ einfach in an sich bekannter Weise zu messen. Die Bestimmung der Bauteillebensdauer wird erfindungsgemäß vorteilhaft nur durch einfach durchzuführende Auswertungen von Messwertveränderungen durchgeführt.

Zu unterschiedlichen Zeitpunkten wird dazu jeweils eine Messung der Bauteilverformung ausgelöst. Der Zeitpunkt entsprechend dem Auftreten eines vorbestimmten Betriebszustands wird so ausgewählt, dass Lastniveaus mit deutlich messbaren Verformungen und bevorzugt mit hohem Schädigungsanteil auftreten. Vorzugsweise wird dabei der Schädigungsanteil durch ein häufiges Auftreten dieses Lastniveaus erreicht und nicht durch hohe Lasten mit geringer Häufigkeit, um eine große Anzahl an Messergebnissen zu gewinnen, deren zwangsläufig auftretende Streuungen somit besser als Streuung und nicht als sich abzeichnender Bauteilschaden bewertbar ist.

Zur Erstellung einer Messkurve werden zweckmäßig auf der X-Achse eines Diagramms die Anzahl der Messwerte aufgetragen, die als Nutzungsdauer interpretierbar sind. Auf der Y-Achse kann die Verformung aufgetragen werden. Optisch verständlicher ist es jedoch deren Kehrwert, eins durch die Verformung, aufzutragen, womit eine Messkurve analog zum Verlauf der Steifigkeit erhalten wird. Damit zeigt sich in einer ersten Stufe zu Beginn der Bauteilnutzungsdauer ein starker Steifigkeitsabfall durch Fließen und Setzen, dem sich in einer zweiten Stufe ein Plateaubereich mit leicht linear abfallender Steifigkeit über die Lebensdauer anschließt, sowie am Ende der Nutzungsdauer in einer dritten Stufe ein stark progressiver Abfall. Für die Auswertung wird als Messkurve eine Gerade ermittelt, die das beschriebene Plateau in ihrem Verlauf gut abbildet, wobei dies bereits nach wenigen Messwerten im Plateaubereich möglich ist. Jeder weitere Messwert wird dahingehend bewertet, wie er die Charakteristik der zuvor ermittelten Geraden verändert oder davon abweicht. Vorzugsweise wird für eine Auswertung eine Veränderung der Steigung diese Gerade als Kriterium herangezogen. Nimmt nach dem Plateaubereich der Betrag der Steigung über mehrere Messwerte deutlich über den Wert der Streuung zu, so beginnt der Bereich des progressiven Steifigkeitsabfalls als Signal zum Austausch des Bauteils. Im Prinzip wird somit das Differenzial der gemittelten Messkurve ausgewertet.

Erfindungsgemäß wird somit vorteilhaft der Verschleißzustand eines verformbaren Bauteils während seiner Bauteilnutzungsdauer unmittelbar und direkt festgestellt. Damit kann ein Bauteil über seine tatsächliche Lebensdauer bis zum Beginn seines progressiven Steifigkeitsabfalls genutzt werden. Insbesondere können damit durch Nutzungsdauerschätzungen vorgegebene, präventive Austauschmaßnahmen vor dem tatsächlich möglichen Nutzungsende entfallen, wodurch Wartungs- und Betriebskosten eingespart werden. Zudem ist die Bauteilsicherheit durch die Messung am Bauteil erhöht und das Risiko eventueller Folgekosten bei einem nicht erkannten Bauteilausfall ist reduziert.

Bei jedem Auftreten eines vorbestimmten Betriebszustands kann jeweils ein einziger Messvorgang gestartet und durchgeführt werden. Alternativ und/oder zusätzlich kann bei einem langen Anhalten eines solchen Betriebszustands auch nach einer vorbestimmten Wartezeit jeweils selbsttätig wieder ein weiterer Messvorgang gestartet und durchgeführt werden.

Da eine Bauteilverformung auch temperaturabhängig ist, soll als weitere Bedingung für den Start eines Messvorgangs und/oder für die Verwertung eines Messwerts ein Temperaturfenster von 6°C eingehalten werden, wobei dieses Temperaturfenster in einem Temperaturbereich von 0°C bis 35°C wählbar ist. Dabei wird berücksichtigt, dass Temperatureinflüsse bei Temperaturen unter 0°C und über 35°C zu starken, ungünstigen Messwertschwankungen führen. Der Temperatureinfluss auf die Messwerte in einem Temperaturfenster von 6°C innerhalb des Temperaturbereichs von 0°C bis 35°C ist dagegen für die erfindungsgemäße Auswertung vernachlässigbar.

Sollte ein Messvorgang wegen festgestellter ungünstiger Temperaturen nicht erfolgen oder durchgeführt und/oder nicht verwertet werden, jedoch die übrigen Startbedingungen insbesondere der vorbestimmte Betriebszustand erfüllt sein, wird ein Messwertzähler entsprechend einer Nutzungsdauer dennoch hoch gesetzt, um die Messkurve, insbesondere den Steifigkeitsverlauf nicht zu verzerren.

Ab dem Beginn des progressiven Steifigkeitsabfalls kann regelmäßig eine Weiterbenutzungsdauer als Restlebensdauer des Bauteils von 10% der bisherigen Bauteilnutzungsdauer angenommen werden. Diese Information kann zusätzlich zum Signal für den Austausch des Bauteils gegeben werden.

Konkret kann als Sensor zur Messung der Bauteilverformung eine Sensorik zur Messung einer Verschiebung und/oder einer Geschwindigkeit und/oder einer Beschleunigung verwendet werden. Eine Verformung kann dabei zwischen Bauteilkomponenten und/oder Anbauteilen direkt oder indirekt gemessen werden. Dabei kann die Sensorik in das verformbare Bauteil, insbesondere in ein Elastomer integriert sein und/oder an angrenzenden/benachbarten Anbauteilen angeordnet sein. Beispielsweise kann ein Abstand als Bauteilverformung direkt gemessen werden, indem auf der Innenseite eines Gummi-Metall-Lagers ein Signalgeber sitzt und auf der Außenseite ein Aufnehmer. Es ist auch möglich, bei den Elementen die Beschleunigungen zu messen, zweimal zu integrieren und zu addieren, so dass der Relativweg erhalten wird. Je nach den Gegebenheiten können an sich bekannte einfache induktive Wegaufnehmer, magnetoresistive Sensoren, Hallsonden, Beschleunigungssensoren oder andere Sensoren verwendet werden, mit der eine Verschiebung, eine Geschwindigkeit, eine Beschleunigung oder ein anderes verschiebungsäquivalentes Signal gemessen werden kann.

Zweckmäßig werden die Erfassungseinheit und die Mess- und Auswerteeinheit mit ihren Komponenten in eine meist geräteseitig vorhandene Zentralelektronik voll- oder teilintegriert, wobei gegebenenfalls auch geräteseitig ohnehin für andere Zwecke vorhandene Messwerte, beispielsweise Geschwindigkeitsmesswerte mitverwertet werden können.

Anhand einer Zeichnung wird die Erfindung weiter erläutert.

Es zeigen:
- Fig. 1: ein Ablaufdiagramm für die erfindungsgemäße Bestimmung des Beginns einer verschleißbedingten Restnutzungsdauer, und
- Fig. 2: ein typisches Diagramm einer Messkurve.

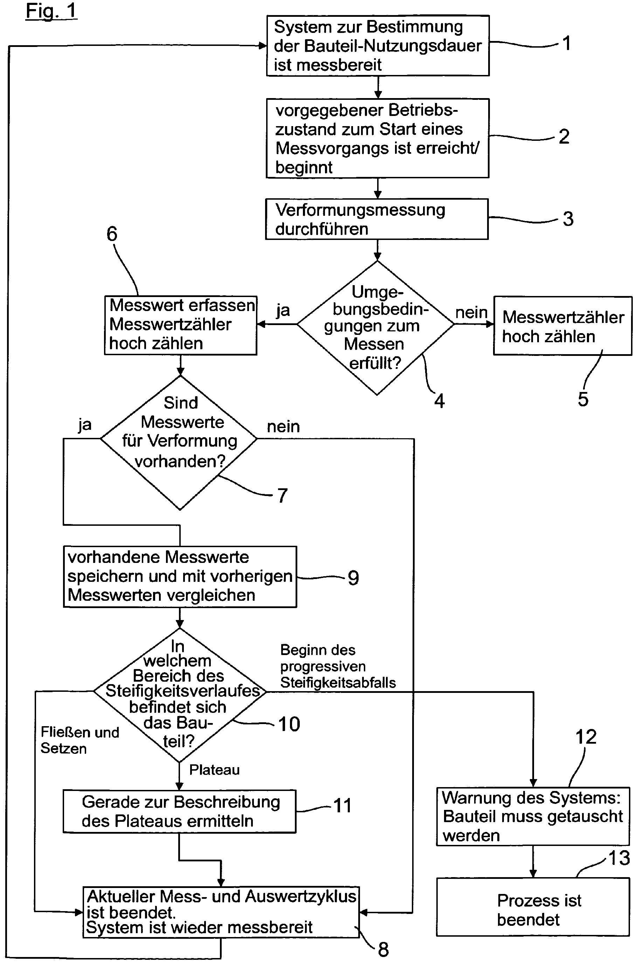

In Fig. 1 ist die Prozessabfolge anhand von Status/Prozess-Rechtecken und Entscheidungsrauten dargestellt:
Gemäß dem ersten Rechteck 1 ist das System zur Bestimmung der Bauteilnutzungsdauer messbereit. Als Bauteil wird hier beispielhaft ein Gummi-Metall-Lager in einem verbauten Zustand angenommen.

Gemäß der beiden nachfolgenden Rechtecke 2 und 3 wird ein vorgegebener Betriebszustand zum Start eines Messvorgangs erreicht, worauf der Befehl zur Durchführung einer Verformungsmessung gegeben wird.

Ein solches Triggersignal für einen Messstart kann bei einem Einsatz des Gummi-Metall-Lagers im Bahnbetrieb (Lokomotive/Wagon) durch Erreichen eines Messabschnitts mittels eines Positionssignals ausgegeben werden. Beim Einsatz in Windenergieanlagen kann das Triggersignal ausgegeben werden, wenn eine vorgegebene Windgeschwindigkeit erreicht und eine Gondel der Anlage in den Wind ausgerichtet ist. Bei einer Verwendung in der Luftfahrt kann als Triggersignal der Beginn eines Flugmanövers verwendet werden. Beim Einsatz in Schiffer kann das Triggersignal bei Erreichung einer vorgegebenen Motorleistung abgegeben werden.

In der Entscheidungsraute 4 wird zudem überprüft, ob gegebenenfalls zusätzliche Umgebungsbedingungen, insbesondere ein vorgegebenes Temperaturfester bei der Messung erfüllt sind. Je nach Anwendungsfall können auch weitere Randbedingungen vorgegeben werden, beispielsweise ein Beladungsfenster bei einem Fluggerät.

Sind die Umgebungsbedingungen/Randbedingungen zum Messen nicht erfüllt, wird der Messwertzähler dennoch hochgezählt, um dadurch sonst gegebene Verzerrungen der Messkurve weitgehend zu reduzieren (Rechteck 5).

Sind die Umgebungsbedingungen/Randbedingungen zum Messen erfüllt, wird ein Messwert erfasst und der Messwertzähler hochgezählt (Rechteck 6).

In der folgenden Entscheidungsraute 7 wird festgestellt, ob Werte für die Verformung vorhanden sind, ist dies nicht der Fall, wird der aktuelle Mess- und Auswertezyklus beendet.

Sind Messwerte vorhanden, werden diese gespeichert und mit vorhergehenden Messwerten verglichen.

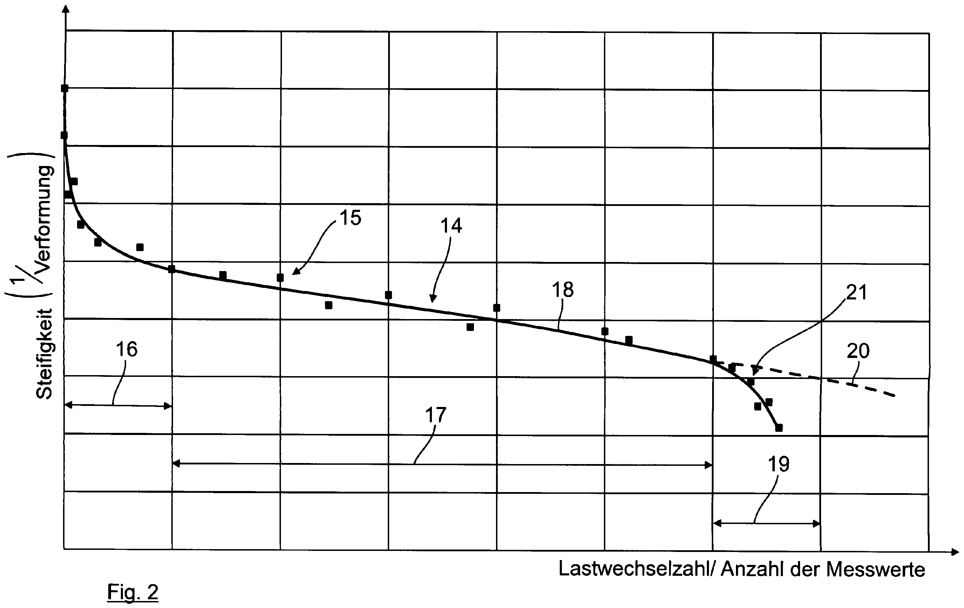

Anschließend wird dieser Vergleich ausgewertet (Entscheidungsraute 10) und festgestellt in welchem Bereich des Steifigkeitsverlaufs sich das Bauteil befindet. Ein typischer Steifigkeitsverlauf ist nachfolgend anhand des Diagramms der Fig. 2 dargestellt und erläutert.

Wenn der erste Bereich 16 mit relativ schnell abfallender Steifigkeit zum Nutzungsbeginn, der durch Fließen und Setzen des Elastomermaterials hervorgerufen wird, festgestellt wird, ist dies kein Hinweis auf den Beginn eines baldigen Nutzungsendes, so dass der aktuelle Mess- und Auswertezyklus beendet wird (Rechteck 8).

Wird ein Steifigkeitsverlauf dergestalt ermittelt, dass der zweite Bereich 17 als Plateaubereich durch die aktuelle Messung weitergeführt ist, wird die Gerade zur Beschreibung des Plateaubereichs weitergeführt (Rechteck 11). Auch dies ist kein Hinweis auf den Beginn eines Nutzungsendes, so dass auch für diesen Fall der aktuelle Mess- und Auswertezyklus beendet wird (Rechteck 8).

Wird dagegen anschließend an einen Plateaubereich in einem dritten Bereich 19 des Steifigkeitsverlaufs ein progressiver Steifigkeitsabfall bei der Auswertung festgestellt, gibt das System eine Warnung aus, dass das überwachte Bauteil getauscht werden muss (Rechteck 12). Mit dieser Warnung bezüglich des überwachten Bauteils wird der Prozess beendet (Rechteck 13).

In Fig. 2 ist in einem Diagramm eine typische Messkurve 14 für eine Bauteilnutzung eines elastisch verformbaren Bauteils, hier beispielhaft ein Gummi-Metall-Lager bei aufeinanderfolgenden innerhalb geringer Grenzen gleichen und zeitlich versetzt auftretenden Belastungen dargestellt.

Dazu ist nach oben auf der Y-Achse die jeweils ermittelte Kenngröße für die Steifigkeit als 1 geteilt durch Verformung aufgetragen. Auf der X-Achse des Diagramms ist die Anzahl der Messwerte aufgetragen, die als Nutzungsdauer interpretierbar ist. Beispielsweise ist hier jeweils ein relevantes Flugmanöver mit gleichen Abständen angegeben, wobei für jedes solches Flugmanöver ein dazu vorhandener Messwert im Diagramm als Messpunkt 15 eingezeichnet ist.

Durch nicht genau exakt erfassbare Betriebsbedingungen und Messtoleranzen streuen ersichtlich die Messpunkte 15 jedoch in nur geringem und für die zu treffende Aussage bezüglich der Nutzungsdauer unbedeutendem Umfang. Bei der Auswertung wird daher eine Interpolation vorgenommen mit folgendem Ergebnis:
Im ersten Steifigkeitsbereich 16 fällt die Steifigkeit durch Fließen und Setzen relativ schnell ab. Im zweiten Steifigkeitsbereich 17, der durch eine Gerade 18 durch Ausmittelung der Messwertstreuung angegeben werden kann, ist ein Plateaubereich durch einen nur sehr geringen Steifigkeitsabfall gekennzeichnet. Im Diagramm ist dieser Steifigkeitsbereich zur besseren Verdeutlichung mit einer relativ großen Neigung der Geraden 18 dargestellt. Zudem ist tatsächlich der zweite Steifigkeitsbereich 17 als Plateaubereich im Vergleich zum ersten und dritten Steifigkeitsbereich 16, 19 wesentlich größer/länger mit vielen Messwerten 15 und hier zur besseren Verdeutlichung des prinzipiellen Verlaufs der Messkurve verkürzt dargestellt. Anschließend an den Plateaubereich 17 wird im dritten Steifigkeitsbereich 19 ein schneller progressiver Steifigkeitsabfall festgestellt als Hinweis für einen bald erforderlichen Austausch des Bauteils entsprechend dem Rechteck 12 aus Fig. 1. Dieser progressive Steifigkeitsabfall als deutliche Abweichung von der Verlängerung 20 der Geraden 18 ist bereits kurz nach seinem Beginn (beispielsweise mit Messwert 21) schnell und einfach feststellbar.

## Patentansprüche

1. Gerät mit wenigstens einem elastisch verformbaren Bauteil als Strukturteil und/oder Lagerteil, auf das im Betriebsverlauf von wechselnden Betriebszuständen abhängige, unterschiedliche Verformungskräfte einwirken, die zu einem die Bauteilnutzungsdauer begrenzenden Bauteilverschleiß führen,
**dadurch gekennzeichnet,**
**dass** das Gerät eine Erfassungseinheit aufweist, die ausgestaltet ist einen vorbestimmten sich zeitversetzt wiederholenden, jeweils gleichen Betriebszustand zu erkennen und zu erfassen, dem jeweils eine gleiche Verformungskraft zugeordnet ist,
**dass** das Gerät einen bauteilzugeordneten Sensor und eine nachgeschaltete Mess- und Auswerteeinheit aufweist, wobei bei Erkennung und Erfassung eines solchen vorbestimmten Betriebszustands (2) durch die Erfassungseinheit mit einem Startsignal selbsttätig ein Messvorgang startbar und durchführbar ist (3) und für eine Bauteilüberwachung mit dem Sensor und der Mess- und Auswerteeinheit eine Bauteilverformung als Kenngröße für eine aktuelle Bauteilsteifigkeit messbar ist und der Messwert speicherbar ist,
**dass** die Mess- und Auswerteeinheit eine Vergleichereinheit aufweist, mit der ein Vergleich eines aktuellen Verformungsmesswerts bezüglich vorhergehender, gespeicherter Verformungsmesswerte durchführbar ist (9) mit dem Ergebnis,
**dass** die über eine relativ lange Nutzungsdauer gespeicherten Verformungsmesswerte, bzw. entsprechende Kenngrößen für die Bauteilsteifigkeit etwa gleich sind und eine aus den Messwerten gebildete Messkurve (14) einen Plateaubereich (17) mit im Verlauf dieser Nutzungsdauer geringem Neigungsanstieg für die Bauteilverformung bzw. geringem Neigungsabfall für die Bauteilsteifigkeit ergibt, womit eine weitere sichere Bauteilfunktion feststellbar ist, oder
**dass** alternativ über eine gegenüber der Nutzungsdauer des Plateaubereichs kurze Nutzungsdauer nacheinander sukzessiv und progressiv größer werdende Verformungsmesswerte erfassbar sind, so dass der Plateaubereich mit einem gegenüber dem Plateaubereich stärkeren Steigungsanstieg einer Messkurve bezüglich der Bauteilverformung bzw. einem gegenüber der Neigung des Plateaubereichs stärkeren Neigungsabfall einer Messkurve (14) bezüglich der Bauteilsteifigkeit verlassen ist (19), wodurch der Beginn einer verschleißbedingen vorgebbaren Bauteil-Restnutzungsdauer feststellbar ist und eine entsprechende Warninformation ausgebbar ist (12), beim Erreichen eines als Schwellwert vorgegebenen Steigungsanstiegs bzw. Neigungsabfalls der Messkurve (14).

2. Gerät nach Anspruch 1, **dadurch gekennzeichnet, dass** ein zu Beginn einer Bauteilnutzung erfasster ansteigender oder abfallender Bereich (16) der Messkurve (14), bei der Auswertung für den Beginn einer Restnutzungsdauer nicht herangezogen wird.

3. Gerät nach Anspruch 1 oder Anspruch 2, **dadurch gekennzeichnet, dass** für den Fall, dass nach dem Start und der Durchführung eines Messvorgangs der für den Start erfasste Betriebszustand für eine vorbestimmte Zeitdauer anhält, ist nach einer vorbestimmten Wartezeit jeweils selbsttätig ein weiterer Messvorgang startbar und durchführbar, ansonsten ist jeweils beim Auftreten eines solchen Betriebszustands ein einziger Messvorgang startbar und durchführbar.

4. Gerät nach einem der Ansprüche 1 bis 3, **dadurch gekennzeichnet, dass** die Umgebungstemperatur um das Bauteil mit einer Temperaturmesseinheit erfassbar ist und der Start eines Messvorgangs und/oder die Verwertung eines Messwerts nur freigebbar ist (4), wenn die Umgebungstemperatur für jeden Messvorgang in einem vorgebbaren jeweils gleichen Temperaturfenster, vorzugsweise in einem Temperaturbereich von 6°C liegt, wobei das Temperaturfenster in einem Temperaturbereich von 0°C bis 35°C wählbar ist, und
dass beim Vorliegen der übrigen Startbedingungen ein Messwertzähler dennoch hochsetzbar ist (5), wenn nur die Temperaturbedingung und gegebenenfalls weitere vorgebbare Randbedingungen zur Freigabe nicht erfüllt sind.

5. Gerät nach einem der Ansprüche 1 bis 4, **dadurch gekennzeichnet, dass** die bisherige Bauteilnutzungsdauer bis zur Abgabe einer Warninformation erfassbar ist und mit der Warninformation eine Information zur möglichen unkritischen Weiterbenutzung bzw. bis zu einem zwingend erforderlichen Bauteilaustausch mit einer Weiterbenutzungsdauer als Restlebensdauer von 10% der bisherigen Bauteilnutzungsdauer ausgebbar ist.

6. Gerät nach einem der Ansprüche 1 bis 5, **dadurch gekennzeichnet, dass** als Sensor zur Messung der Bauteilverformung eine Sensorik zur Messung einer Verschiebung und/oder einer Geschwindigkeit und/oder einer Beschleunigung verwendbar ist, womit eine Verformung als Verschiebung zwischen Bauteilkomponenten und/oder Anbauteilen direkt oder indirekt messbar ist, und
dass die Sensorik zumindest teilweise in das verformbare Bauteil integriert und/oder an angrenzenden/benachbarten Anbauteilen angeordnet ist.

7. Gerät nach einem der Ansprüche 1 bis 6, **dadurch gekennzeichnet, dass** die Erfassungseinheit und die Mess- und Auswerteeinheit mit ihren Komponenten in eine geräteseitige Zentralelektronik voll- oder teilintegriert sind.

## Claims

1. Device having at least one elastically deformable component as a structural part and/or bearing part, on which various deformation forces that are dependent on changing operating states and lead to component wear, which limits the component service life, act over the course of operation,
**characterized**
**in that** the device has a recording unit designed to detect and record a predetermined operating state that recurs at staggered times and is the same in each case, and which has an associated identical deformation force in each case,
**in that** the device has a component-associated sensor and a downstream measuring and evaluation unit, wherein detection and recording of a predetermined operating state (2) of this kind by the recording unit results in a measurement process being automatically startable and performable (3) by means of a starting signal, and a component deformation being measurable by means of the sensor and the measuring and evaluation unit as a characteristic quantity for a present component rigidity for component monitoring, and the measured value being storable,
**in that** the measuring and evaluation unit has a comparator unit by means of which a comparison of a present deformation measured value with preceding, stored deformation measured values is performable (9) with the result
that the deformation measured values stored over a relatively long service life, or corresponding characteristic quantities for the component rigidity, are approximately identical and a measurement curve (14) formed from the measured values results in a plateau region (17) with a small rise in inclination for the component deformation over the course of this service life, or a small drop in inclination for the component rigidity, whereupon further reliable component operation is apparent, or that, alternatively, successively and progressively increasing deformation measured values are recordable in succession over a short service life in comparison with the service life of the plateau region, so that the plateau region is exited (19) with a larger rise in inclination for a measurement curve relating to the component deformation in comparison with the plateau region, or with a larger drop in inclination for a measurement curve (14) relating to the component rigidity in comparison with the inclination of the plateau region, as a result of which the start of a wear-induced prescribable remaining component service life is apparent and appropriate warning information is outputtable (12) when a rise in inclination or drop in inclination, prescribed as a threshold value, of the measurement curve (14) is reached.

2. Device according to Claim 1, **characterized in that** a rising or falling region (16), recorded at the start of component use, of the measurement curve (14) is not used for the evaluation for the start of a remaining service life.

3. Device according to Claim 1 or Claim 2, **characterized in that** if, after the start and performance of a measurement process, the operating state recorded for the start lasts for a predetermined period, then a further measurement process is automatically startable and performable in each case after a predetermined waiting period, otherwise a single measurement process is startable and performable whenever such an operating state occurs.

4. Device according to one of Claims 1 to 3, **characterized**
**in that** the ambient temperature around the component is recordable by means of a temperature-measuring unit, and the start of a measurement process and/or the utilization of a measured value is enablable (4) only if the ambient temperature for each measurement process is in a prescribable, respectively identical temperature window, preferably in a temperature range of 6°C, wherein the temperature window is selectable in a temperature range of from 0°C to 35°C, and
**in that** when the other starting conditions are satisfied, a measured value counter is still incrementable (5) if only the temperature condition and, if appropriate, further prescribable boundary conditions for enabling are not satisfied.

5. Device according to one of Claims 1 to 4, **characterized in that** the previous component service life up to the delivery of warning information is recordable and, with the warning information, information is outputtable concerning possible non-critical continued use or up to absolutely necessary component replacement with a period of continued use as a residual life of 10% of the previous component service life.

6. Device according to one of Claims 1 to 5, **characterized**
**in that** the sensor usable for measuring the component deformation is a sensor system for measuring a displacement and/or a speed and/or an acceleration, wherein a deformation is measurable directly or indirectly as a displacement between component parts and/or attachments, and
**in that** at least part of the sensor system is integrated in the deformable component and/or arranged on adjoining/adjacent attachments.

7. Device according to one of Claims 1 to 6, **characterized in that** the recording unit and the measuring and evaluation unit have their components fully or partially integrated in central electronics of the device.

## Revendications

1. Appareil comprenant au moins un élément structural déformable élastiquement, en tant que pièce de structure et/ou pièce support, sur lequel, en cours de fonctionnement, agissent différentes forces de déformation dépendantes d'états opérationnels changeants, lesquelles mènent à une usure de l'élément structural qui limite la durée d'utilisation de l'élément structural,
**caractérisé**
**en ce que** l'appareil possède une unité de détection qui est configurée pour reconnaître et détecter un état opérationnel prédéterminé respectivement identique qui se répète de manière décalée dans le temps, auquel est respectivement associé une force de déformation identique,
**en ce que** l'appareil possède un capteur associé à l'élément structural et une unité de mesure et d'interprétation montée en aval, une opération de mesure pouvant être démarrée et exécutée (3) automatiquement par l'unité de détection avec un signal de démarrage en cas de reconnaissance et de détection d'un tel état opérationnel (2) prédéterminé et, pour une surveillance de l'élément structural, une déformation de l'élément structural pouvant être mesurée avec le capteur et l'unité de mesure et d'interprétation en tant que grandeur caractéristique pour une rigidité actuelle de l'élément structural et la valeur mesurée pouvant être mémorisée,
**en ce que** l'unité de mesure et d'interprétation possède une unité de comparaison avec laquelle peut être réalisée une comparaison d'une valeur mesurée de déformation actuelle concernant des valeurs mesurées de déformation précédentes mémorisées (9) avec le résultat,
**en ce que** les valeurs mesurées de déformation, ou les grandeurs caractéristiques pour la rigidité de l'élément structural, qui sont mémorisées sur une durée d'utilisation relativement longue sont approximativement identiques et une courbe de mesure (14) formée à partir des valeurs mesurées produit une zone de plateau (17) ayant une faible croissance de pente pour la déformation de l'élément structural ou une faible décroissance de pente pour la déformation de l'élément structural, moyennant quoi une fonction sécurisée supplémentaire de l'élément structural peut être spécifiée, ou
**en ce qu'**en variante, des valeurs mesurées de la déformation chronologiquement successives et augmentant progressivement peuvent être acquises sur une durée d'utilisation courte par rapport à la durée d'utilisation de la zone de plateau, de sorte que la zone de plateau est quittée (19) avec une croissance de pente plus importante d'une courbe de mesure par rapport à la zone de plateau pour ce qui concerne la déformation de l'élément structural ou avec une décroissance de pente plus importante d'une courbe de mesure (14) par rapport à la pente de la zone de plateau pour ce qui concerne la déformation de l'élément structural, moyennant quoi il est possible de spécifier le début d'une durée d'utilisation restante pouvant être prédéfinie de l'élément structural liée à l'usure et de délivrer (12) une information d'alerte correspondante en atteignant une croissance de pente ou une décroissance de pente de la courbe de mesure (14) prédéfinie en tant que valeur de seuil.

2. Appareil selon la revendication 1, **caractérisé en ce qu'**une zone (16) croissante ou décroissante de la courbe de mesure (14) acquise au début d'une utilisation de l'élément structural n'est pas utilisée lors de l'interprétation pour le début d'une durée d'utilisation restante.

3. Appareil selon la revendication 1 ou la revendication 2, **caractérisé en ce que** dans le cas où après le démarrage et la réalisation d'une opération de mesure, l'état opérationnel détecté pour le démarrage se prolonge pendant une durée prédéterminée, une opération de mesure supplémentaire peut être automatiquement démarrée et réalisée respectivement après un temps d'attente prédéterminé, sinon une opération de mesure unique peut être démarrée et réalisée respectivement lors de la survenance d'un tel état opérationnel.

4. Appareil selon l'une des revendications 1 à 3, **caractérisé en ce que** la température ambiante autour de l'élément structural peut être détectée avec une unité de mesure de température et le démarrage d'une opération de mesure et/ou l'évaluation d'une valeur mesurée ne peut être validée (4) que lorsque la température ambiante se trouve, pour chaque opération de mesure, dans une fenêtre de température respectivement identique pouvant être prédéfinie, de préférence dans une plage de température de 6 °C, la fenêtre de température pouvant être sélectionnée dans une plage de température de 0 °C à 35 °C, et
**en ce qu'**en présence des autres conditions de démarrage, un compteur de valeur mesurée ne peut toutefois être incrémenté (5) que si seule la condition de température et les éventuelles autres conditions de démarrage pouvant être prédéfinies ne sont pas remplies pour la validation.

5. Appareil selon l'une des revendications 1 à 4, **caractérisé en ce que** la durée d'utilisation précédente de l'élément structural jusqu'à la délivrance d'une information d'alerte peut être détectée et une information à propos d'une poursuite de l'utilisation non critique possible ou jusqu'à un remplacement obligatoirement nécessaire de l'élément structural peut être délivrée avec l'information d'alerte avec une durée de poursuite d'utilisation en tant que durée de vie restante égale à 10 % de la durée d'utilisation précédente de l'élément structural.

6. Appareil selon l'une des revendications 1 à 5, **caractérisé en ce que** le capteur utilisé pour mesurer la déformation de l'élément structural peut être un système de détection destiné à mesurer un décalage et/ou une vitesse et/ou une accélération, moyennant quoi une déformation peut être mesurée directement ou indirectement sous la forme d'un décalage entre des composants de l'élément structural et/ou des éléments structuraux rapportés, et
**en ce que** le système de détection est au moins partiellement intégré dans l'élément structural déformable et/ou disposé sur des éléments structuraux rapportés adjacents/voisins.

7. Appareil selon l'une des revendications 1 à 6, **caractérisé en ce que** l'unité de détection et l'unité de mesure et d'interprétation avec leurs composants sont entièrement ou partiellement intégrées dans une électronique centrale côté appareil.
